# EUROPEAN PATENT SPECIFICATION

(11) **EP 0 183 468 B1**
(45) Date of publication and mention of the grant of the patent: **07.01.1993**
(21) Application number: 85308402.8
(22) Date of filing: 19.11.1985
(51) Int. Cl.: A23L 3/02, A23L 3/14, A23L 3/10, A23L 3/16

(54) **Apparatus for cooking and chilling food using heat exchange unit for process water make-up**
Gerät zum Kochen und Abkühlen von Nahrungsmitteln unter Benutzung eines Wärmeaustauschers zur Prozesswasseraufbereitung
Appareil pour cuire et réfrigérer des produits alimentaires utilisant un échangeur de chaleur pour traiter des effluents aqueux

(30) Priority: 27.11.1984 US 675308
(43) Date of publication of application: 04.06.1986
(73) Proprietor: J C PARDO AND SONS, Baltimore Maryland 21220 (US)
(72) Inventor: Pardo, Warren A., Bel Air, MD 21014 (US); Pardo, Richard J., Baltimore, MD 21237 (US); Gabriele, Valentino, Baltimore, MD 21220 (US)
(74) Representative: Waxweiler, Jean

(56) References cited:
- AU-B- 62 998
- CH-A- 570 123
- DE-C- 549 913
- US-A- 4 218 486
- US-A- 4 301 718

## Description

The invention concerns an apparatus for thermal processing of food materials sealed in flexible casings.

Cooking on a large scale such as in institutional situations and the like has been improved within the recent past by the introduction of a food preparation process known as the CRYOVAC® Process, this process being described in United States patent 4,218,486 to W. R. Grace Company. Use of the CRYOVAC® Process allows food to be prepared in large batches and inventoried in cold storage at temperatures preferably between -2°C to 0 °C without freezing for periods of time ranging up to 45 days without deterioration of the organoleptic properties of the food. Flavor is actually enhanced during storage periods due to the comingling of the constituent ingredients of the food within the sealed casings. Accordingly, only that portion of the inventoried food which is needed for a particular meal in a commercial food service operation is reheated to accommodate the requirements of the particular meal situation at hand. Use of this process reduces pressures of meal preparation deadlines, allows reduction of staff on weekends, holidays, and the like, and provides reductions of loss and waste due to overproduction of requirements for a particular meal situation. Many costs and practical advantages in commissary food service operation such as exist in hospitals, school lunch programs, public and private institutions, and the like are attainable through use of the process described in United States patent 4,218,486 and in the various ways in which the general process of this patent is carried out in practice.

In essence, the CRYOVAC® Process involves the packaging at appropriate temperatures of foods which are packaged in one of several types of casings such as are produced by W. R. Grace Company and particularly the CRYOVAC Division, these casings being designated as C-300 and L-600 casings for example. Food items cooked in kettles and pumped into such casings or actually cooked within such casings are rapidly cooled to a temperature of approximately 4 °C within a relatively short period of time, for example 30 to 40 minutes, and then stored at temperatures between -2 ° to 0 °C for periods of time of up to approximately 45 days. Refrigerated storage is possible for this period of time without freezing due to the low bacteria count in the sealed casings. Food prepared in this manner retains the flavor, texture and palatability of freshly cooked foods once the food is rethermalized to serving temperature.

Apparatus previously employed for practice of the CRYOVAC® Process has been designed and intended for large scale cooking operations, that is, greater than 2500 meals per day, no prior apparatus being available to small volume users.

Accordingly, it is an object of the present invention to provide apparatus having the capability within a single structure to cook food items packaged in sealed casings in a hot water bath and to chill the food items so cooked, the food items also being rethermalized within the same structure as desired.

It is another object of the present invention to provide an apparatus having the capability of rapid assembly and removal of the cylinder to allow modification of the apparatus to differing cooking and chilling requirements, the apparatus also imparting a massaging action to the food items within the casings on tumbling of the casings within the cylinder, the casings being thus deformed during such tumbling to augment mixing of the food materials to thereby insure uniform heating and/or cooling.

It is yet another object of the present invention to provide for supplying both heated and chilled potable process water to the interior of the cooking/chilling apparatus in energy cost efficient manner, while keeping design flexibility in food process installations.

The above object is achieved in an apparatus for thermal processing of food materials sealed in flexible casings, which comprises:
tank means for holding a thermal medium in which the sealed flexible casings are substantially immersed and thermally processed,
means communicating with the tank means for filling the tank means with said thermal medium;
a hollow body member mountable for motion within the tank means and receiving the flexible casings therewithin for imparting motion to said casings therewithin for imparting motion to said casings to facilitate thermal processing of the food material sealed within the casings;
apertures formed in at least a portion of the walls of said hollow body member, the apertures facilitating flow of the thermal medium through the body member on movement of the body member;
means mounting the hollow body member within the tank means for moving the hollow body member;
said communication means being adapted for selectively filling the tank with said thermal medium at a temperature suitable for either cooking or chilling food materials within the flexible casings, the thermal processing occurring within the same tank means without removal of the sealed flexible casings from the tank means between cooking and chilling steps;
heat exchange means coupled to at least one source of said thermal fluid for passing the thermal medium in heat exchange relation with the thermal fluid to maintain the thermal medium at a desired temperature for thermal processing of the food materials.

Advantageous embodiments of the invention are described in the dependant claims.

The apparatus of the invention is capable of cooking and chilling food items sealed in casings for subsequent refrigerated storage over extended periods of time and particularly capable of both sequentially cooking and chilling food items within a single tank structure. The apparatus has the capability of tumble chilling cooked food items in casings to rapidly cool the contents of the casings from a cooking temperature at which bacteria are effectively killed to a relatively cool temperature at which bacterial action is reduced to allow refrigerated storage for substantial periods of time without loss of flavor, texture and palatability. The apparatus of the invention is cost effective and energy efficient by supplying both heated and chilled potable process water to a tank within which such cooking and chilling occurs.

The apparatus of the invention has the capability of practicing the CRYOVAC® Process in small volume, typically less than 2500 meals per day, over a monthly production schedule. The present invention particularly replaces multiple pieces of equipment within the known larger system described hereinbefore and provides capabilities within a single apparatus which has not heretofor been available. The present apparatus efficiently provides within a relatively inexpensive structure the capability of both cooking and chilling food items sealed within casings such as are described in U.S. patent 4,218,486 and also provides the capability of tumble chilling, tumble cooking and tumble rethermalization with a desired massaging action of casings filled with food items and materials cooked in either the present apparatus or other apparatus. The present apparatus therefore contributes to an efficient practice, particularly on a relatively small scale, of the CRYOVAC® Process while contributing to the provision of an overall system which is inexpensive and compact.

The present apparatus may include a tumble chiller cylinder which is perforated to allow free flow of a liquid chilling medium and which is provided with longitudinally spaced "ribs" which act to strengthen the cylinder and also act to deform the casing on contact to thereby cause movement of the food materials contained within the casings such that uniform chilling of the contents of the casings is accomplished. The present apparatus also provides the capability of tumble cooking of food sealed within casings. Food such as instant potatoes, powdered eggs and the like, can be charged in the casings with appropriate seasonings and other ingredients and sealed. The sealed casings are then placed within the present apparatus and particularly within the confines of the tumble cylinder with water at a cooking temperature being charged into the apparatus on closure thereof, tumbling of the cylinder acting to massage the contents of the casings and thereby admix said contents while cooking same to a desired temperature. The food products thus cooked may be served at once while hot or chilled for storage and future use. If refrigerated storage is desired, the apparatus is then drained, preferably automatically, of the cooking water and filled with chilled water followed by tumble chilling according to a preferred mode of use of the apparatus so as to cool the contents of the casings to a desired temperature within a desired period of time to allow storage of the thus-cooked and chilled food materials according to the process referred to hereinabove.

Refrigerated food items in sealed casings can also be rethermalized to serving temperatures prior to serving by subjection to tumble heating within the present apparatus. The massaging action previously described relative to tumble chilling and tumble cooking acts in substantially the same manner to heat the cool foods within the sealed casings to a desired serving temperature. A heated water bath within the apparatus is thereby more efficiently employed for reheating of the previously cooked and stored foods. Rethermalization can thus be accomplished due in part to the massaging action within approximately the same period of time, that is, 45 to 60 minutes, as is required to cool the hot food items in sealed casings as noted above. The time period for reheating the cooled food items from storage is not, however, critical.

According to one aspect of the invention, the apparatus essentially comprises a tank having an upper portion which opens to allow access to the interior of the tank, the tank being generally cylindrical but with modification from this general conformation. The tank has its longitudinal axis disposed substantially horizontally and is mounted upon appropriate leg mounts or the like. A steam jacket formed on lower exterior walls of the tank allows heating of the liquid media within the tank so that cooking within the tank can be accomplished. Steam connections to the steam jacket are provided in a conventional manner with water outlet and inlet connections to the interior of the tank being also provided and controlled by appropriate control mechanisms. The steam-jacketed tank so provided can be used with appropriate mounting baskets to hold food materials such as beef roast and the like in appropriate casings, the tank being charged with hot water for slow water cooking in a static mode. Upon completion of such a cooking cycle, the hot cooking water is drained and the tank is charged with chilled water which rapidly cools the cooked food within the casings to a desired temperature within a desired period of time for storage under refrigeration.

According to a second aspect of the invention, steam or other heated fluid is supplied to a heat exchange device, preferably a shell and tube heat exchanger, to heat potable process water which is circulated through the heat exchange device from a tank in which cooking of food materials within sealed casings occurs. On completion of the cooking cycle, the heated cooking water is preferably dumped and potable process water is chilled within the same heat exchange device by means of a cold liquid passing in heat exchange relation with the potable process water within the same exchanger used for heating of the process water during the cooking cycle. During the chilling cycle, the potable process water is circulated, preferably continuously, through the heat exchanger and in heat exchange relation with the chilled liquid in order to maintain a desired cooling rate within the tank. The cooked contents within the casings are preferably chilled to a desired temperature, on the order of 4 °C, within a desired period of time, this period of time ranging between 30 and 45 minutes for maximum shelf life and preferably not greater than 60 minutes. This rapid chilling reduces bacterial growth and rapidly quenches the cooking process to assist in the maintenance of the freshness and eating quality of the food product contained within the casings. The the shape of the tank is not critical, thereby rendering a system configured according to the invention less expensive from the standpoint of equipment costs as well as the labor costs required for manufacture of the apparatus. Further, an energy efficient cooking system is provided since a complete cooking apparatus configured according to the present invention does not radiate substantial heat from the cooking tank even if the cooking tank is not insulated. A system configured according to the invention can be better insulated for even greater energy efficiency. Operational advantages accrue from the ability to rapidly heat the potable process water. Design flexibility is also created within a total cooking system since system size can be readily varied by variations of the capacities of pumps and heat exchange devices. The heat exchange portion of the present embodiment can be compactly packaged and placed remotely from the cooking tank in order to maximize design requirements for particular installations.

According to the several aspects of the invention, the apparatus includes a tumble cylinder which is perforated and which is mounted for rapid assembly and disassembly within the tank with the longitudinal axis of the tumble cylinder being disposed in a substantially horizontal orientation. The cylinder is mounted on quick-disconnect drive and butt shafts such that the tumble cylinder can be rotated in any of a number of desired modes of rotation, either partial or complete, in order to tumble casings filled with food materials within the interior of the cylinder, thereby to either cook or chill food placed within the casings. The tumbling action of the cylinder coupled with a massaging action provided by the tumbling and augmented by rib structures which extend into the interior of the cylinder causes the contents of the casings to be efficiently and uniformly mixed and either heated or chilled as desired, the structure being useful in the chilling of food materials within casings to a desired low temperature within relatively short periods of time in order to accommodate the requirements of the CRYOVAC Process as described in United States patent 4,218,486.

The level of both cooking and cooling water within the tank can be readily adjusted from externally of the tank and the motion of the tumble cylinder can be controlled over any desired degree of partial or complete revolution and multiples thereof in any desired sequence.

Further objects and advantages of the present invention will become more readily apparent in light of the following detailed description of the preferred embodiments shown in the attached drawings, wherein:
FIGURE 1 is a perspective view of a first embodiment of the present cooker/chiller apparatus showing the tumble cylinder mounted within the tank body of the apparatus;
FIGURE 2 is a cross-sectional view of an apparatus substantially similar to that shown in Figure 1;
FIGURES 3A and 3B are sectional views of the drive shaft and shaft coupling arrangement utilized on the drive end of the tumble cylinder for rapid removal of the cylinder from the apparatus;
FIGURES 4A and 4B are sectional views of the passive coupling arrangement used for rapid assembly and disassembly of the tumble cylinder within the apparatus;
FIGURE 5 is a detailed view in section of a single perforation such as is used to perforate the tumble cylinder;
FIGURES 6A and 6B are elevational views of the apparatus used to control rotation of the tumble cylinder within the tank; and,
FIGURE 7 is a diagrammatical representation of a second embodiment of the invention utilizing a shell and tube heat exchanger to both heat and cool potable process water utilized within a cooking/chilling tank forming a portion of a food process system.

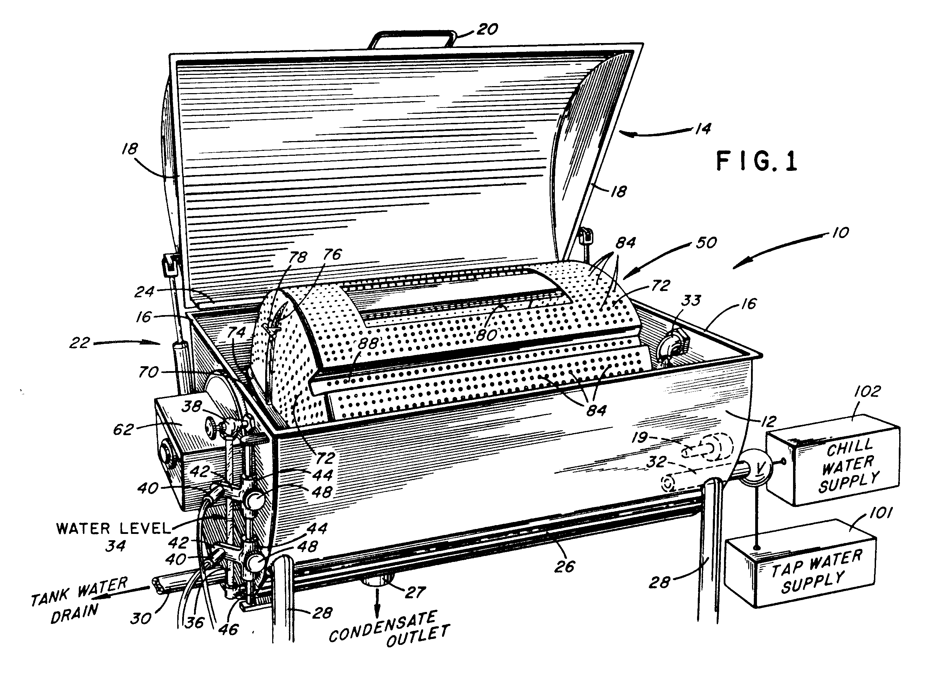

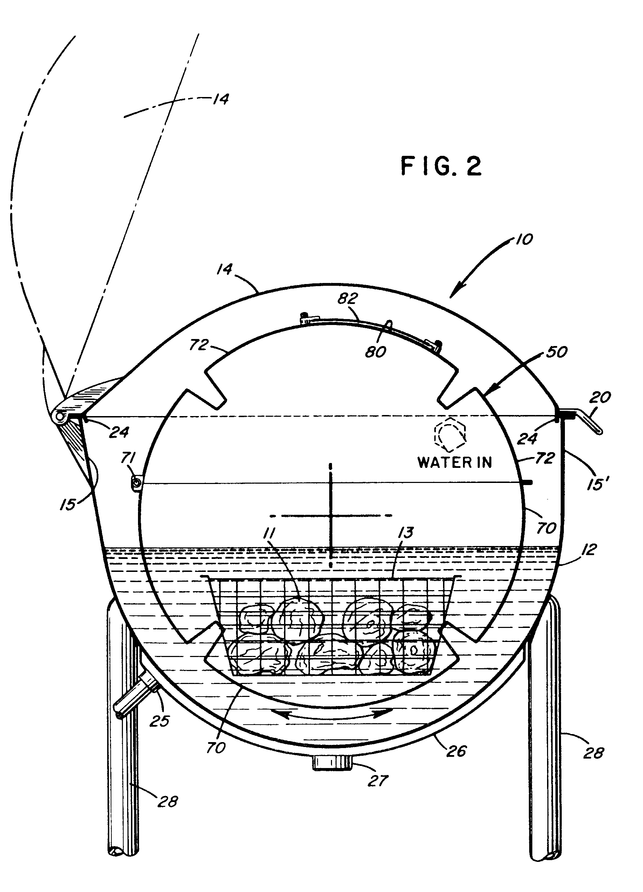

Referring now to the drawings, and particularly to Figures 1 and 2, a first embodiment of the present apparatus is seen at 10 to comprise a tank 12 having a tank cover 14 hinged along opposing edges as will be described hereinafter, the tank 12 having a lower portion which describes a minor portion of a cylinder and having front and rear straight walls 13 and 15, the longitudinal axis of the tank 12 being disposed substantially horizontally. The rear straight wall 15 of the tank 12 extends at an angle to the vertical and is flared rearwardly to allow clearance when the tank cover 14 is in the open position. Further, the configuration of the rear wall 15 facilitates opening of the upper portion of a tumble cylinder 50 which will be described hereinafter. The tank 12 also includes a steam lip 16 which takes the form of a flange-like element extending about the full perimeter of the opening of the tank 12, the steam lip 16 mating with steam lip 18 on the tank cover 14 to function in the manner of a seal to maintain both water and heated vapors within the interior of the tank 12 when the tank cover 14 is closed thereover.

The tank cover 14 can be opened and closed through the use of handle 20, the tank cover 14 being controlled in closing movement relative to the tank 12 by means of either a pneumatic cylinder and rod mechanism 22 or tension springs (not shown) which are mounted to the tank 12 and the tank cover 14 in order to provide a slow closing of the tank cover 14. A drip lip 24 extends downwardly along the center periphery of the tank cover 14 to accommodate drainage of moisture which condenses on the inside of the tank cover 14, the drip lip 24 directing the mixture into the interior of the tank 12 in order to prevent spillage of liquid externally of the apparatus 10.

The tank 12 is provided with a steam jacket 26 which can be formed in a variety of ways depending upon preference. An inexpensive and effective manner of providing the steam jacket 26 is through embossing. In practice, the steam jacket 26 provides a space over lower portions of the tank 12 into which steam can be directed in order to heat a liquid such as water which is contained within the tank 12, thereby to cook foods sealed in casings 11 which are contained within the apparatus 10. Steam provided to fill the steam jacket 26 enters said jacket through steam inlet 25 and exists through a steam outlet (not shown), condensation exiting the steam jacket through a drain 27. All of these elements are essentially conventional. The casings 11 such as are seen in Figure 2 are held within baskets 13 and the food items within the casings 11, such as whole roasts, chicken parts, and the like, are cooked and cooled in a static mode. In the static cook and chill process, shelves (not shown) can be substituted for the baskets 13 in order to separate the casings 11 and allow thorough cooking and cooling. The tank 12, both with and without the baskets 13, can be used without tumble cylinder 50 as a matter of convenience when using the static processing mode. As described herein, casings 11 filled with food items are placed in the tumble cylinder 50 without the use of the baskets 13 or other structure in order to cook, chill or rethermalize the food items within the casings. In these processing modes, the tumbler cylinder 50 is rotated to provide the advantages herein described.

In Figure 2, the tank 12 is mounted to legs 28 in order to maintain the apparatus 10 in a substantially horizontal disposition, the tank 12 being elevated above floor level in order to accommodate a drain 30 which drains water as required from the tank 12 at completions of a cooking or cooling cycle. A cold water inlet 32 is provided at one end of the tank 12 for filling the tank with tap water from a supply 101 to a desired level. The drain 30 is disposed at an opposite end of the tank 12 so that a uniform end-to-end circulation of water can be effected, thereby providing more uniform temperature. A water outlet (not shown) separate from the drain 30 is provided for recirculation of water in association with a water recirculation inlet 33. However, the drain 30 can alternatively be used for removal of water from the tank 12 in a recirculating arrangement. The water level within the tank 12 is selected through operation of the water level adjustment mechanism 34. A polycarbonate impact resistant sight tube 36 mounted to communicate with the interior of the tank 12 is disposed vertically on one side of the tank 12. A manual shutoff valve 38 is mounted appropriately on the tube 36 for the purpose of discontinuing the flow of water into the tube 36. The water level within the tank 12 can thus be determined from simple observation of the tube 36. Further, a pair of proximity switches 40 are mounted at desired levels along the tube 36 in order that a desired high and low water level within the tank 12 can be selected and maintained. The proximity switches 40 are of a capacitive type such as is manufactured by Automatic Timer and Control Company of King of Prussia, Pennsylvania, the upper switch 40 sensing the water level within the tube 36 and being electronically connected to appropriate controls to discontinue filling of the tank 12 through the water inlet 32 when the water level within the tube 36 reaches the level at which the upper proximity switch 40 is disposed. The proximity switches 40 are mounted on bars 42 which are connected to sleeves 44, the sleeves 44 being free to travel along a vertical rod 46 mounted to the side of the tank 12 next to and parallel with the tube 36, manually operated knobs 48 actuating a set screw (not shown) to hold the sleeves 44 and thus the switches 40 at a desired vertical orientation along the rod 46 and relative to the tube 36. The lower proximity switch 40 is used to start the process of filling the tank 12 and to control a recirculating water pump (not shown) which is used in both cooking and chilling cycles. Temperature control of the water within the tank 12 is maintained by an insert probe temperature sensor shown at 19 and which is connected to appropriate controls (not shown) in a conventional manner.

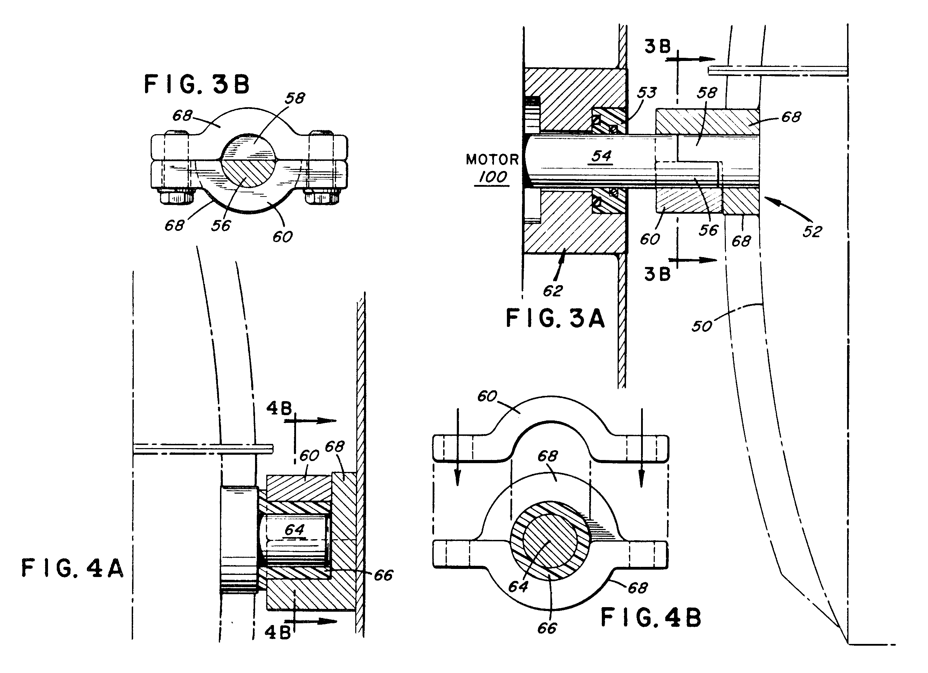

Figures 1 and 2 show a tumble cylinder 50 mounted within the tank 12 by means of a quick-disconnect drive shaft arrangement similar to that described in United States patent application, Serial No. 468,764, filed February 22, 1983, and assigned to the present assignee, the drive shaft arrangement of said patent application being used with the shaft of a rotary agitator. In the present situation, the tumble cylinder 50 mounts to the tank 12 at an "active" end by means of a stub shaft arrangement 52 such as is shown in Figures 3A and 3B. A stub shaft 54 is seen to extend through a side wall of the tank 12 and to have a semicircular split end 56 which mates with a complementary split end 58 formed on the tumble cylinder 50 along the longitudinal axis of said cylinder 50. The split ends 56 and 58 have alignable channels (not shown) formed therein through which a quick-release pin (not shown) can be received, this structure being substantially identical to that described in the aforesaid patent application. A collar 60 is mounted over the split end 58 and receives the split end 56 thereinto. The collar 60 having apertures alignable with the aforementioned channels for receiving the quick-release pin, this structure not being shown for simplicity but being described in detail in the aforesaid patent application. The tumble cylinder is thus mounted within the tank 12 and held to the stub shaft 54 in a manner which allows rapid disconnection to allow the tumble cylinder to be quickly removed from the tank 12 as desired. The stub shaft 54 is driven by a motor (not shown in Figure 3A) through a heavy duty double bearing block assembly 62 and a double "O" ring liquid seal in a Teflon retainer as shown at 53. The motor preferably comprises a fixed speed constant torque hydraulically driven gear head motor. The motor 100 when used with appropriate controls (not shown) is capable of instant reversal of direction from clockwise to counterclockwise in order to effect the desired direction of motion as required to yield the massage action to the food item filled and sealed casings which are freely contained within the cylinder 50 of Figure 1 but which are not shown in Figure 1 for each of illustration. However, the motor 100 can be selected from a variety of structures capable of performing the intended function of the invention.

Figures 4A and 4B illustrate the mounting of the tumble cylinder 50 within the tank 12 at the "passive" end of the cylinder 50. A butt shaft 64 mounted to the tumble cylinder 50 and disposed along the longitudinal axis thereof is provided with a Teflon bushing 66 which is received within a bearing element 68 mounted to the wall of the tank 12. The shaft 54 and associated bushing can thus be readily slipped from engagement with the bearing element 68 during disassembly of the tumble cylinder 50 from within the tank 12. Sealing of the stub shaft 54 and passage through the wall of the tank 12 is accomplished in a conventional manner, the bearing assembly 62 being provided with suitable sealing arrangements for preventing loss of liquid from within the tank 12 through that portion of the tank wall through which the shaft passes.

The tumble cylinder 50 is substantially cylindrical in conformation and is formed of two portions, a lower portion 70 and an upper portion 72. The lower portion 70 comprises a greater proportion of the cylindrical body of the cylinder 50 with the upper portion 72 comprising a minor portion of the cylinder, these two pieces of the tumble cylinder 50 being held together along mating flanges 74 which extend about the full periphery of the juncture of said portions 70 and 72 by any of a variety of attachment structures spaced around the mating flanges 74 and which act to secure the portions 70 and 72 together. The attachment structures can comprise swing bolts which include wing nuts (not shown) and which are loosened and tightened by means of conventional tools to allow assembly of the portions 70 and 72 together as well as disassembly as desired. The portions 70 and 72 of the tumble cylinder 50 can be held together by the use of hinges (such as seen at 71 in Figure 2). Hinges such as the hinge 71 can use tension spring assistance so that the upper portion 72 can be more easily opened for loading without the need for a permanent opening and a matching door in the portion 72. The use of three hinges along with structures to hold the portions 70 and 72 together will also negate the necessity for removal of the upper portion 72 during static cooking operations. As will be apparent to those skilled in the art, the portions 70 and 72 of the cylinder 50 can be attached for ready assembly and disassembly in a variety of ways. In one embodiment of the invention, the upper portion 72 can be provided with an opening and a removable door to facilitate access to the interior of the cylinder 50 as will be described hereinafter. In this embodiment, the use of hinges as aforesaid would be of lesser utility.

End stiffeners 76 are provided on both of the portions 70 and 72 on external surfaces thereof to provide greater rigidity to the tumble cylinder 50. The end stiffeners 76 substantially comprise straight flanges which extend perpendicular to the mating flanges 74. Handles 78 are provided to facilitate lifting of the tumble cylinder from within the tank 50, the handles 78 being preferably mounted at upper portions of the cylinder 50 such that the upper portion 72 can be easily lifted from the lower portion 70 or so that the entire tumble cylinder 50 can be removed from the tank 12.

The upper portion 72 of the tumble cylinder 50 can be provided with an opening 80 which can be closed by means of a perforated lid 82. The lid 82, shown in Figure 2, can be readily removed to allow access to the interior of the tumble cylinder 50. Alternatively, and as previously discussed, the upper portion 72 can be formed without the opening 80 with access to the interior of the tumble cylinder 50 being gained by virtue of the removal of the upper portion 72 from the lower portion 70, or by merely opening the upper portion 70 to an approximately 60° up angle from the horizontal position. Figure 2 illustrates both a hinge arrangement at 71 and the opening 80 and lid 82 arrangement, it being understood that either of these arrangements can be used without the need for the other.

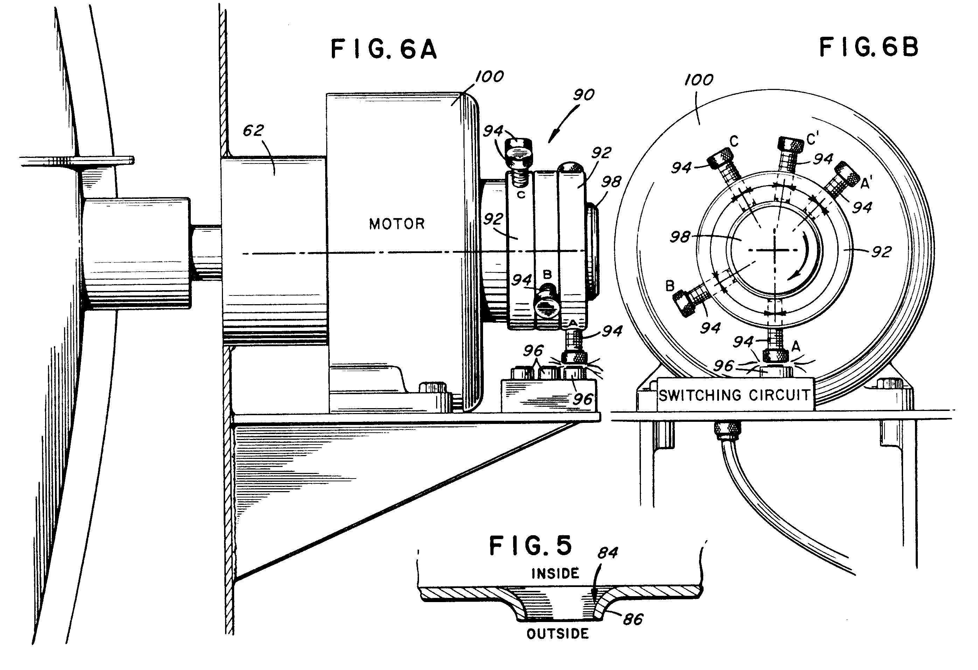

As seen in Figure 1 and also in Figure 6, a pattern of perforations 84 is provided over all surfaces of the tumble cylinder 50, peripheral lip 86 bounding each perforation 84 extending outwardly of the tumble cylinder 50 so as to provide a smooth surface within the interior of the tumble cylinder 50 in order that casings held within said cylinder 50 are not nicked or cut by metal burrs such as can be present about perforations as would be conventionally formed when a piece of metal is provided with an aperture of any kind. The perforations 84 allow free passage of liquid within the tank 12 through the walls of the tumble cylinder 50, thereby to contact food-filled casings (not shown) within the cylinder 50 with either cooking or cooling water as desired. As is particularly seen in Figure 1, the perforations 84 formed in cylindrical side walls are substantially linearly arranged while the perforations 84 formed in end walls of the tumble cylinder 50 are substantially radially directed and in alignment with each other.

The tumble cylinder 50 is formed with four indented rib elements 88 which perform several functions, a first function of the rib elements 88 being the strengthening of the tumble cylinder 50 in a longitudinal sense. The rib elements 88 are substantially spaced 90° apart about the surface of the cylinder 50 and are substantially U-shaped with the body of the rib elements extending into the interior of the tumble cylinder 50 and substantially along the full length thereof. The rib elements 88 are also provided with perforations 84 to allow flow of liquid through these portions of the tumble cylinder 50. A particular object of the rib elements 88 is the augmentation of the massaging action which the tumbling of food-filled casings within the tumble cylinder provides. In essence, the rib elements 88 contact the casings on tumbling of said casings within said cylinder and deform the casings to cause the contents thereof to mix such that uniform heating or cooling of said contents occurs by virtue of the fact that the contents of the casings move from exteriorly disposed to interiorly disposed positions within the casings. This movement of the contents of the casings within the casings occurs not only as a result of the tumbling of the casings within the cylinder 50 but also due to contact with the rib elements 88.

All materials from which the apparatus 10 are formed, with exceptions being certain plumbing items and mechanisms, constitute 18-8 Type 304, Grade SA-240 stainless steel with all welds being ground smooth and being free of cracks, crevices and other defects. The inside and outside of the tumble cylinder 50 is electropolished with all perforations 84 being deburred and being free of snags and nicks. Interior and exterior surfaces have a 100 grit or equivalent finish. The working pressure of the steam jacket 26 is rated 25 psig (with higher pressures being available if needed up to 100 psig) and is in conformance with ASME codes. Plumbing connections for handling water and steam have appropriate fittings, steam traps, etc. as is known in the art.

Referring now to Figures 6A and 6B, control elements for appropriate rotation of the tumble cylinder 50 are shown at 90 to include nonmetallic sleeves 92 on which metal bolts 94 are disposed, the bolts 94 can essentially comprise any metallic element which extends from the sleeves 92 and which can be brought into proximity with the proximity switches 96 disposed one each in alignment with the sleeves 92. The sleeves 92 can be rotated about shaft 98 to a desired position such that the bolts 94 are set in a desired angular relation to each other. Accordingly, on rotation of the shaft 98 by means of the motor 100, the bolts 94 are brought into proximity with the switches 96 in an order dictated by the positioning of the sleeves 92 on the shaft 98. Accordingly, the direction of rotation of the tumble cylinder 50 is dictated by a positioning of the sleeves 92 and of the bolts 94 on said sleeves 92. As is shown in Figures 6A and 6B, the bolt on the outermost sleeve 92 has come into alignment with the outermost proximity switch 96 on rotation of the shaft 98 in either a clockwise or a counterclockwise direction. Accordingly, alignment of the bolt 94 as aforesaid causes the outermost proximity switch 96 to produce an electrical signal and provides said signal to associated electronic control elements such that the direction of rotation of the tumble cylinder 50 is reversed and the rotation thus continues in that reverse direction until actuation of another proximity switch 96 allows for either a continuation of rotation or a reversal of rotation or even a stop of the tumble cylinder 50. Accordingly, a programmed sequence of rotational movements of the tumble cylinder 50 can be provided and controlled by the action of the switches 96 as actuated by the bolts 94 on rotation of the shaft 98. The switches are preferably of the inductive type such as are manufactured by Automatic Timer and Controls Company of King of Prussia, Pennsylvania as the series 8000 Efector electronic proximity switches, these designations being trademarks of the Automatic Timer and Controls Company.

The present apparatus 10 can be used with a shell and tube heat exchanger (not shown) for circulating potable water in heat exchange relation with a water/propylene glycol mixture at - 2 °C in order to continually cool the recycled chill water, only potable water being in contact with the casings of food located within the apparatus 10. Chilled water can conveniently be supplied through the inlet 32 by means of a chill water supply 102 as schematically shown in Figure 1. The supply 102 can include a variety of refrigeration subsystems including ice making apparatus and heat exchange apparatus. A heat exchanger used with the present invention can comprise a portion of an ice builder system which can be incorporated into the chill water supply 102 and used to produce ice utilized in the apparatus 10 for chilling filled casings during a chilling tumble mode of operation. An ice and water cooling mode can be manually provided by adding crushed ice to the tank 12 at a rate of .45 kilogram of ice to both .45 kilogram of food product and .45 kilogram of process water in order to chill the batch load within the sealed casings from at least 71°C to approximately 4°C in less than 60 minutes and preferably less than 45 minutes. The proximity switches 40 and the electronic controls used therewith (not shown) are used in reverse order to that previously described. As the ice melts and the water level rises, the upper proximity switch causes excess water to be drained off to a level at which the lower proximity switch acts to discontinue water drainage. The crushed ice and water slurry is thus held within a two inch high height movement.

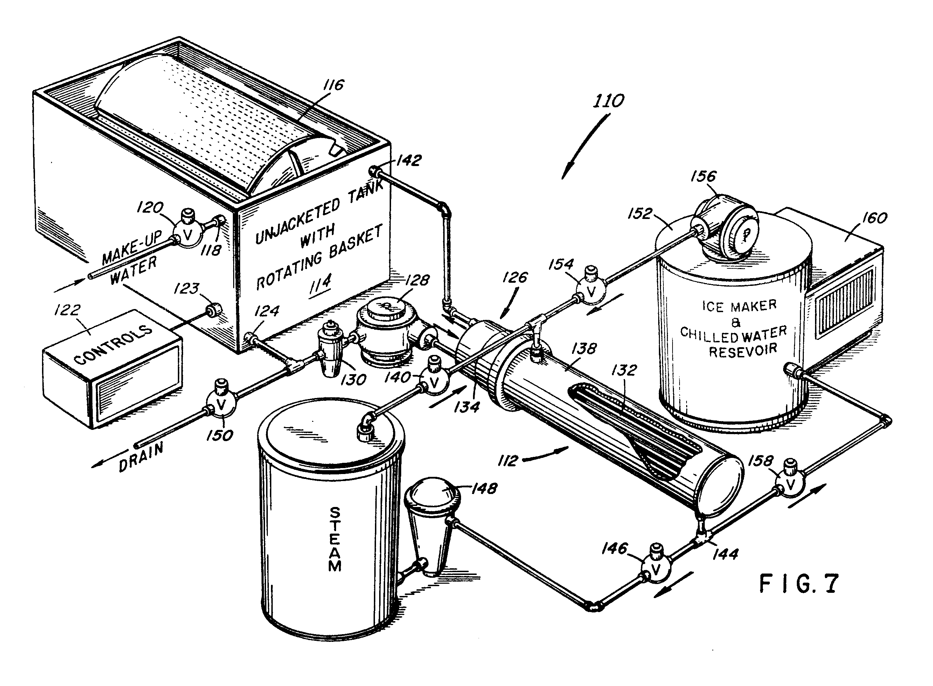

Referring now to Figure 7, a second embodiment of a potable process water thermalization system is seen generally at 110 and has as a primary component a heat exchanger 112 through which potable process water is circulated in order to be heated or chilled depending on whether the process water is to be employed within a tank 114 as a cooking medium or as a cooling medium. The tank 114 substantially corresponds in function to the tank 12 described above with the exception that the tank 114 does not have a steam jacket formed thereon, potable process water used for cooking purposes within the tank 114 being heated within the heat exchanger 112 as will be described hereinafter. The tank 114 may otherwise be configured substantially as is the tank 12 shown in Figures 1 and 2 inter alia with the exceptions hereinafter provided. In particular, the tank 114 may be shaped in the semicylindrical fashion as is the tank 12 of Figures 1 and 2 or may be formed into the shape of a rectangular solid as is seen in Figure 7. For ease of illustration, a tumble cylinder 116 is shown in phantom as being mounted for rotation within the tank 114 as is described relative to the cylinder 50 hereinabove. The mounting and drive structure used to mount the tumble cylinder 116 within the tank 114 is essentially identical to that described above relative to the cylinder 50 and the tank 12.

Since the tank 114 is not required to conform to ASME code regulations concerning pressures which would act upon tank walls by virtue of the provision of a steam jacket thereon, the shape of the tank 114 can be chosen for maximum ease of fabrication, thereby introducing manufacturing economies. The tank 114 can also be understood to be energy efficient since the tank 114 itself does not radiate substantial heat even if uninsulated. The tank 114 can also be insulated much more readily than can a tank having a steam jacket mounted thereon. Shaping of the tank 114 as shown in Figure 7 further provides advantages in a static cook situation as will be described in detail hereinafter.

The tank 114 is filled with potable process water at the beginning of either a cook or a chill cylce through an inlet 118 controlled by a make-up solenoid control valve 120, potable water for making up the process water being obtained from a tap source (not shown) in a conventional manner. The inlet 118 and solenoid control valve 120 are positioned in Figure 7 other than as would be preferred in an actual embodiment in order to simplify illustration of the invention. The solenoid control valve 120, as well as the other solenoid control valves as will be described herein, is preferably sequenced automatically by controls 122. It should be understood that the controls 122 allow for both manual and automatic sequencing of the control valve functions as well as other functions, such as time and temperature control, through conventional electro-mechanical controls which will be discussed herein. Process water is fed into the tank 114 to a desired depth, a full static cooking load having process water typically within 8.75 cm of the top of the tank 114 whereupon the valve 120 shuts the flow of water off from the potable water source.

Once the tank 114 is filled with potable process water, a cooking cycle is usually first initiated in order to cook food items contained within sealed casings (not shown) contained within the tumble cylinder 116 or simply placed within the tank 114. The potable process water is heated to a desired cooking temperature by recirculation of the process water through outlet 124 and into "tube side" 126 of the heat exchanger 112, the process water being thus circulated by process water pump 128 located in line between the outlet 124 and the heat exchanger 112. A conventional strainer 130 can be employed between the outlet 124 and the pump 128. The process water moves in line under the impetus of the pump 128 into the tube side 126 of the heat exchanger 112, the process water moving through the heat exchanger 112 within the plurality of tubes 132 located within the heat exchanger 112. As is conventional, the tubes 132 connect at inlet and outlet manifolds, shown generally at 134 as is conventional in a shell and tube heat exchange device. The heat exchanger 112 further has "shell side" 138 into which steam is directed through steam supply solenoid control valve 140, the valve 140 being either manually or automatically controlled through the controls 122 as aforesaid. Steam supplied to the shell side 138 of the heat exchanger 112 yields heat to the process water. The thus-heated process water is then carried through appropriate line connections back to the interior of the tank 114 as seen at 142. In order to maintain a desired cooking temperature within the tank 114, the process water is recirculated as just described.

A necessary control function is provided through the use of a temperature sensing probe 123 which preferably comprises a Type "J" (iron-constantan) thermocouple. The probe 123 is connected to the controls 122 to allow recordation of temperature on a strip chart recorder (not shown) and to allow control (with a temperature controller, not shown, in the controls 122) of set point of the process water in a temperature range of between 4 °C and 71 °C with ± 1° accuracy during both cook and cool cycles.

The heat exchanger 112 connects at the shell side 138 with an outlet 144 which is controlled by a condensate drain solenoid control valve 146 which controls the purging of condensates and spent steam from the heat exchanger 112. An in-line steam trap 148 can be provided downstream of the control valve 146 in a conventional manner. The steam fed into the heat exchanger 112 can be provided by a conventional source which is not shown for the sake of simplicity.

On completion of the cooking cycle within the tank 114, the heated process water is preferably dumped through the outlet 124 under control of a water drain solenoid control valve 150, thereby to empty the tank 114 to allow fresh make-up water to be supplied into the tank 114 through the inlet 118 as aforesaid. At this point in a complete process, however, the potable process water fed into the tank 114 is circulated into the heat exchanger through the control valve 120 under the impetus of the process water pump 128 so that the process water can be chilled rather than heated. In particular, chilled fluid, preferably liquid, from an ice builder and chilled water reservoir 152 is directed into the shell side 138 of the heat exchanger 112 under the control of a chilled water supply solenoid control valve 154. A pump 156 moves the chilled liquid through connecting lines from the ice builder and chilled water reservoir 152 to the heat exchanger 112 in a conventional manner. The process water moving from the tank 114 for chilling within a heat exchanger 112 passes into the tube side 126 of the heat exchanger and passes in heat exchanging relation with the chilled liquid from the reservoir 152, the process water thereby being chilled to approximately 1 °C and being passed back into the tank 114 through the same plumbing used to pass the heated process water employed in the cooking cycle as aforesaid. The thus-chilled process water is used within the tank 114 to rapidly cool cooked food items sealed in casings as aforesaid to obtain the benefits of the CRYOVAC Process as are described in United States patent 4,218,486 and as previously described. As is noted from the foregoing, the potable process water in both the heating and chilling modes is always supplied to the tube side 126 of the heat exchanger 112, that is, the potable process water passes through the tubes 132 of the heat exchanger 112 in order that this circuit through the heat exchanger is always occupied by the potable process water, thereby eliminating the potential for contamination of the process water which comes into contact with the sealed casings containing food items. It is of importance that the process water remain potable throughout the entire cooking and/or chilling process in order to assure highest standards of safety and quality in the practice of the total process.

The solenoid valves are used in pairs, such as the pairs 146, 158 and 140, 154, to function in sequence. When using steam, only the valves 140 and 146 are activated in the open position while valves 154 and 158 remain in the closed position. The de-energized valves act as check valves to prevent steam or condensate from entering the chilled water system. The reverse occurs in the cooling mode.

The chilled liquid within the shell side 138 of the heat exchanger 112 gains heat during the chilling of the potable process water contained within the tubes 132 and is circulated back to the ice builder and chilled water reservoir 152 in order to re-chill the chilled liquid for resupply to the heat exchanger 112. A chilled water return solenoid control valve 158 operates to return the relatively warm chill liquid under the control of manual or automatic controls as aforesaid. The returned and now relatively warm chilled liquid passes into the ice builder portion of the assembly 152 and is cooled under the influence of an air cooled condenser and refrigerator compressor assembly 160, the re-chilling of the chilled water for use in the heat exchanger 112 being conventional. Of primary importance is the ability to circulate chilled liquid of appropriate temperature into the shell side 138 of the heat exchanger 112 whether or not a system such as is constituted by the ice builder and chill water reservoir 152 and the air cooled condenser and refrigerator compressor assembly 160 is used. Various apparatus capable of adequately cooling a chill liquid supply for use in the heat exchanger 112 exists and can be utilized depending on the requirements of a particular installation.

The potable process water thus chilled within the heat exchanger 112 acts within the tank 114 to chill the cooked food items within the sealed casings either with or without tumbling. Since the chilled potable process water picks up heat from the sealed casings, the process water is, in effect, continuously recirculated through the heat exchanger 112 in order to maintain a desired chilling temperature within the tank 114.

The heat exchanger 112 preferably comprises a four-pass heat exchanger wherein the tubes 132 are U-shaped, the legs of each tube defining two passes. The tubes 132 preferably have a .95 cm outer diameter since smaller tubes tend to foul quickly when used for both heating and cooling. The U-shaped conformation of the tubes 132 also allows for expansion and contraction. A heat exchanger suitable for use with a basic cook/chill tank requires approximately 2.8 square meters of surface area on the tubes 132, a requirement easily met since the .95cm diameter tubes can be efficiently packaged at a maximum density in the heat exchanger. The standard portion of the heat exchanger 112, such as the element head or bonnet, the baffles, the shell, the pipe connections and the tubes 132, are preferably formed of non-ferrous metals such as copper, bronze, brass or admiralty metal on all contact surfaces. The tubes 132 are preferably formed of copper. The heat exchanger 112 is ASME stamped for 75 kilograms maximum W.P. at 150°C temperature limitation. The four pass heat exchanger arrangement is preferred due to the increase in "dwell" time of the process water with only a negligible pressure drop through the tubes 132 being experienced. It is also to be noted that threaded inlet and outlet connections are made to the heat exchanger 112. Heat exchangers such as are manufactured by Ametek Division of Whitlock Products, Grand Prairie, Texas or American-Standard, Heat Transfer Division, Buffalo, New York, can be utilized when configured according to the invention.

In a situation where the tank 114 is used for cooking and chilling of food items sealed in the casings but without the rapid chilling occasioned by the tumble cylinder 116 as previously described, the tumble cylinder 116 can be removed from the tank 114 to provide for static cooking and static chilling. In such a situation, static cooking of greater quantities of a product can be accomplished relative to the quantities which can be processed when the tumble cylinder 116 is in place. Food items such as beef top round roasts, rolled pork roasts, poultry parts, rice pilaf, beef stroganof, stuffed bell peppers, meat loaf, macaroni and cheese, Spanish rice and other items which can be cooked in a static mode directly in sealed casings are best cooked with the tumble cylinder 116 being removed from the tank 114 and with a static cooling cycle within which cooling process water is circulated but without the tumbling action employed with the use of the tumble cylinder 116. Cooling of the food items within the sealed casings under these circumstances requires a greater period of time. However, since the food items are cooked in sealed bags rather than cooked in the atmosphere and then charged into bags for subsequent sealing, the greater cool-down time does not prove disadvantageous since the cooked food items can be held in refrigerated storage for desirable periods of time. Accordingly, the tank 114 can be employed not only for cooking in a static mode but also for chilling in a static mode without the use of a tumble cylinder 116. Formation of the tank 114 in the shape of a rectangular solid also provides additional space within which to place sealed casings for cooking/chilling relative to a semi-cylindrical shape of the cooking tank. It is also to be understood that the tank 114 can be provided with a cover and with similar ancillary systems as described relative to the steam-jacketed tank 12 described above.

In certain food processing situations wherein cooking and chilling are desired, it is possible to use a number of cook/cool tanks such as the tank 114. In such situations, a single heat exchange system can be used to operate two or more of the tanks or even all of the tanks used in such a situation as long as the heat exchanger is of sufficient size. Of course, the heat exchange system can include an appropriate steam handling system and an appropriately sized ice builder and chill water system along with appropriate ancillary equipment. The expense of having a separate heat exchange system for each cook/chill tank is thus avoided. In an arrangement of this nature, the sequence of cooking and chilling in each of the tanks would necessarily be similar.

The capacity of the heat exchange apparatus will vary according to the requirements of a given installation. A basic cook/chill tank as referred to herein typically involves a maximum cook load of 110 kilograms of red meat product in a static mode or 26 casings of a two gallon size of kettle-cooked product. While the structure herein described is preferred, variations can occur and it is apparent to those skilled in the art that, given the above teachings, variations are possible and that the scope of the invention is defined appropriately according to the recitation of the appended claims.

## Claims

1. Apparatus for thermal processing of food materials sealed in flexible casings, comprising:
tank means (12) for holding a thermal medium in which the sealed flexible casings are substantially immersed and thermally processed,
means communicating (32,33;120,142) with the tank means for filling the tank means with said thermal medium;
a hollow body member (50) mountable for motion within the tank means (12) and receiving the flexible casings therewithin for imparting motion to said casings therewithin for imparting motion to said casings to facilitate thermal processing of the food material sealed within the casings;
apertures (84) formed in at least a portion of the walls of said hollow body member (50), the apertures facilitating flow of the thermal medium through the body member on movement of the body member; and
means mounting (54,62,64,68) the hollow body member (12) within the tank means (12) for moving the hollow body member;
characterized by
said communication means being adapted for selectively filling the tank with said thermal medium at a temperature suitable for either cooking or chilling food materials within the flexible casings, the thermal processing occurring within the same tank means without removal of the sealed flexible casings from the tank means between cooking and chilling steps;
heat exchange means (112) coupled to at least one source of said thermal fluid for passing the thermal medium in heat exchange relation with the thermal fluid to maintain the thermal medium at a desired temperature for thermal processing of the food materials.

2. The apparatus of claim 1, characterized by
rib means (188) formed in the body member (50) and extending into the interior thereof for increasing the rate of thermalization of food materials contained within the sealed flexible casings by massaging the sealed casings to effect movement of food materials within said casings and for strengthening the body member along the length thereof.

3. The apparatus of claim 2 wherein rib means (88) comprise at least one rib element (80) formed in a wall of the body member, the rib element (88) being U-shaped in cross section.

4. The apparatus of claim 2 wherein the rib means (88) comprise a plurality of rib elements (88) formed in the walls of the body member and extending longitudinally thereof, the rib elements being regularly spaced about side walls of the body member.

5. The apparatus of anyone of the claims 1 to 4 and further comprising means (13) carried within the body member to support sealed casings disposed within the body member (50).

6. The apparatus of anyone of the claims 1 to 5 wherein the heat exchange means (112) further comprise:
a heat exchanger (112) having a first channel (132) through which the thermal medium flows in heat exchange relation with a thermal fluid in a second channel (138), the second channel (138) being coupled to a first thermal fluid source capable of supplying thermal fluid (steam) to the second channel of the heat exchanger (112) at a first temperature which is higher than the temperature of the thermal medium, thereby to heat the thermal medium, the second channel (138) further being coupled to a second thermal fluid source (160) capable of supplying thermal fluid to the second channel (138) of the heat exchanger (112) at a second temperature which is lower in temperature than the temperature of the thermal medium, thereby to cool the thermal medium; and,
valve means (140, 146, 154, 158) selectively coupling either the first thermal fluid source (steam) or the second thermal fluid source (160) to the second channel (138) of the heat exchanger (112); thereby to selectively heat or cool the thermal medium.

7. The apparatus of claim 6 wherein the heat exchanger (112) comprises a shell and tube heat exchanger.

8. The apparatus of claim 7 wherein the first channel (132) comprises the tube side of the heat exchanger (112) and the second channel (138) comprises the shell side of the heat exchanger (112).

9. The apparatus of claim 6 wherein the thermal fluids from the first and second thermal fluid sources are supplied to the heat exchanger for thermalization of the thermal medium for use in a single tank to sequentially cook and then chill food items contained in the tank.

10. The apparatus of claim 6 further comprising means (124, 128, 142) for circulating the thermal medium from the tank (12; 114) through said first channel (132) back to said tank.

## Patentansprüche

1. Vorrichtung zur thermischen Bearbeitung von Nahrungsmitteln, die in flexible Hüllen eingeschlossen sind, mit:
einer Tankeinrichtung (12) zum Aufnehmen eines thermischen Mediums, in welchem die verschlossenen flexiblen Hüllen im wesentlichen untergetaucht und thermisch bearbeitet werden; einer Einrichtung (32, 33; 120, 142), die mit der Tankeinrichtung in Verbindung steht, um die Tankeinrichtung mit dem thermischen Medium zu füllen;
einem hohlen Körperteil (50), das zur Bewegung innerhalb der Tankeinrichtung (12) befestigbar ist und die flexiblen Hüllen in sich aufnimmt, um die Hüllen in Bewegung zu versetzen und um durch das In-Bewegung-versetzen der Hüllen die thermische Bearbeitung des Nahrungsmittels zu erleichtern, das in die Hüllen eingeschlossen ist;
Löchern (84), die in wenigstens einem Teil der Wände des hohlen Körperteils (50) gebildet sind, wobei die Löcher die Strömung des thermischen Mediums durch das Körperteil bei der Bewegung des Körperteils erleichtern; und
einer Einrichtung (54, 62, 64, 68) zum Befestigen des hohlen Körperteils (12) innerhalb der Tankeinrichtung (12) zum Bewegen des hohlen Körperteils;
dadurch gekennzeichnet,
daß die Verbindungseinrichtung dazu dient, wahlweise den Tank mit dem thermischen Medium zu füllen, das auf einer Temperatur ist, die entweder zum Kochen oder zum Kühlen der Nahrungsmittel innerhalb der flexiblen Hüllen geeignet ist, wobei die thermische Bearbeitung innerhalb derselben Tankeinrichtung erfolgt, ohne daß die verschlossenen flexiblen Hüllen zwischen Koch- und Kühlschritten aus der Tankeinrichtung herausgenommen werden;
daß eine Wärmeaustauscheinrichtung (112) mit wenigstens einer Quelle des thermischen Fluids gekoppelt ist, um das thermische Medium in Wärmeaustauschbeziehung mit dem thermischen Fluid zu bringen und das thermische Medium auf einer gewünschten Temperatur zur thermischen Bearbeitung der Nahrungsmittel zu halten.

2. Vorrichtung nach Anspruch 1, gekennzeichnet durch eine Rippeneinrichtung (188), die in dem Körperteil (50) gebildet ist und sich in das Innere desselben erstreckt, um die Geschwindigkeit der Thermalisierung der in den verschlossenen flexiblen Hüllen enthaltenen Nahrungsmittel zu steigern durch Massieren der verschlossenen Hüllen, um eine Bewegung der Nahrungsmittel innerhalb der Hüllen hervorzurufen und um das Körperteil über der Länge desselben zu verstärken.

3. Vorrichtung nach Anspruch 2, dadurch gekennzeichnet, daß die Rippeneinrichtung (88) wenigstens ein Rippenelement (80) aufweist, das in einer Wand des Körperteils gebildet ist, wobei das Rippenelement (88) im Querschnitt U-förmig ist.

4. Vorrichtung nach Anspruch 2, wobei die Rippeneinrichtung (88) mehrere Rippenelemente (88) aufweist, die in den Wänden des Körperteils gebildet sind und sich in Längsrichtung desselben erstrecken, wobei die Rippenelemente um die Seitenwände des Körperteils regelmäßig beabstandet sind.

5. Vorrichtung nach einem der Ansprüche 1 bis 4 und weiter mit einer Einrichtung (13), die in dem Körperteil gehaltert ist, um die verschlossenen Hüllen abzustützen, welche in dem Körperteil (50) angeordnet sind.

6. Vorrichtung nach einem der Ansprüche 1 bis 5, dadurch gekennzeichnet, daß die Wärmeaustauscheinrichtung (112) weiter aufweist:
einen Wärmetauscher (112), der einen ersten Kanal (132) hat, durch den das thermische Medium in Wärmeaustauschbeziehung mit einem thermischen Fluid in einem zweiten Kanal (138) strömt, wobei der zweite Kanal (138) mit einer ersten thermischen Fluidquelle gekoppelt ist, die in der Lage ist, thermisches Fluid (Dampf) dem zweiten Kanal des Wärmetauschers (112) mit einer ersten Temperatur zuzuführen, die höher als die Temperatur des thermischen Mediums ist, um dadurch das thermische Medium zu erwärmen, wobei der zweite Kanal (138) weiter mit einer zweiten thermischen Fluidquelle (160) gekoppelt ist, die in der Lage ist, thermisches Fluid dem zweiten Kanal (138) des Wärmetauschers (112) mit einer zweiten Temperatur zuzuführen, die niedriger als die Temperatur des thermischen Mediums ist, um dadurch das thermische Medium abzukühlen; und
eine Ventileinrichtung (140, 146, 154, 158) zum wahlweisen Koppeln entweder der ersten thermischen Fluidquelle (Dampf) oder der zweiten thermischen Fluidquelle (160) mit dem zweiten Kanal (138) des Wärmetauschers (112), um dadurch das thermische Medium wahlweise zu erwärmen oder zu kühlen.

7. Vorrichtung nach Anspruch 6, wobei der Wärmetauscher (112) einen Mantel-Rohr-Wärmetauscher aufweist.

8. Vorrichtung nach Anspruch 7, wobei der erste Kanal (132) die Rohrseite des Wärmetauschers (112) und der zweite Kanal (138) die Mantelseite des Wärmetauschers (112) aufweist.

9. Vorrichtung nach Anspruch 6, wobei die thermischen Fluids aus der ersten und zweiten thermischen Fluidquelle dem Wärmetauscher zur Thermalisierung des thermischen Mediums zur Verwendung in einem einzelnen Tank zugeführt werden, um in dem Tank enthaltene Nahrungsmittel nacheinander zu kochen und dann zu kühlen.

10. Vorrichtung nach Anspruch 6, weiter mit einer Einrichtung (124, 128, 142) zum Umwälzen des thermischen Mediums aus dem Tank (12; 114) durch den ersten Kanal (132) zurück zu dem Tank.

## Revendications

1. Appareil pour le traitement thermique de produits alimentaires enfermés d'une manière étanche dans des enveloppes souples, comprenant une cuve (12) destinée à contenir un fluide thermique dans lequel les enveloppes souples et étanches sont pratiquement immergées et traitées thermiquement, des moyens (32,33;120,142) communiquant avec la cuve afin de remplir cette cuve au moyen du fluide thermique, un corps creux (50), pouvant être monté de manière à être mobile dans la cuve (12) et recevant à l'intérieur les enveloppes souples, afin de mettre en mouvement ces enveloppes en vue de faciliter le traitement thermique des produits alimentaires enfermés d'une manière étanche dans les enveloppes, des ouvertures (84) formées dans au moins une partie des parois du corps creux (50), ces ouvertures facilitant l'écoulement du fluide thermique à travers le corps, lors d'un mouvement de celui-ci, et des moyens (54,62,64,68) de montage du corps creux (12) à l'intérieur de la cuve (12), pour mettre en mouvement le corps creux, caractérisé en ce que les moyens de communication sont adaptés de manière à remplir sélectivement la cuve avec le fluide thermique à une température appropriée soit pour la cuisson soit pour le refroidissement des produits alimentaires à l'intérieur des enveloppes souples, le traitement thermique se déroulant à l'intérieur de la cuve elle-même sans extraction des enveloppes souples et étanches hors de la cuve, entre des étapes de cuisson et de refroidissement, et des moyens d'échange de chaleur (112) relié à au moins une source de fluide de transfert de chaleur, afin de faire passer le fluide thermique en relation d'échange thermique avec le fluide de transfert de chaleur, en vue de maintenir le fluide thermique à une température désirée pour le traitement thermique des produits alimentaires.

2. Appareil suivant la revendication 1 caractérisé en ce qu'il comprend un moyen à nervure (88) formé dans le corps (50) et s'étendant vers l'intérieur de celui-ci, afin d'accroître la vitesse du traitement thermique des produits alimentaires contenus dans les enveloppes souples et étanches, par un effet de massage des enveloppes étanches, pour produire un mouvement des produits alimentaires à l'intérieur des enveloppes et pour rigidifier le corps suivant sa longueur.

3. Appareil suivant la revendication 2 caractérisé en ce que le moyen à nervure (88) comprend au moins une nervure élémentaire (88) formée dans une paroi du corps, cette nervure élémentaire (88) ayant une section transversale en forme de U.

4. Appareil suivant la revendication 2 caractérisé en ce que le moyen à nervure (88) comprend une pluralité de nervures élémentaires (88) formées dans les parois du corps et s'étendant dans le sens longitudinal de celui-ci, les nervures élémentaires étant régulièrement espacées tout autour des parois latérales du corps.

5. Appareil suivant l'une quelconque des revendications 1 à 4 caractérisé en ce qu'il comprend en outre des moyens (13), portés à l'intérieur du corps, pour supporter les enveloppes étanches disposées dans le corps (50).

6. Appareil suivant l'une quelconque des revendications 1 à 5 caractérisé en ce que les moyens d'échange de chaleur (112) comprennent en outre un échangeur de chaleur (112) ayant un premier canal (132) à travers lequel le fluide thermique s'écoule en relation d'échange thermique avec un fluide de transfert de chaleur dans un second canal (138), ce second canal (138) étant relié à une première source de fluide de transfert de chaleur capable de fournir un fluide de transfert de chaleur (vapeur), au second canal de l'échangeur de chaleur (112), à une première température qui est supérieure à la température du fluide thermique, de manière à chauffer ainsi ce fluide thermique, le second canal (138) étant en outre relié à une seconde source de fluide de transfert de chaleur (160) capable de fournir un fluide de transfert de chaleur, au second canal (138) de l'échangeur de chaleur (112), à une seconde température qui est inférieure à la température du fluide thermique, de manière à refroidir ainsi ce fluide thermique, et des vannes (140,146,154,158) pour relier sélectivement soit la première source de fluide de transfert de chaleur (vapeur) soit la seconde source de fluide de transfert de chaleur (160) au second canal (138) de l'échangeur de chaleur (112), de manière à chauffer ou refroidir ainsi sélectivement le fluide thermique.

7. Appareil suivant la revendication 6 caractérisé en ce que l'échangeur de chaleur (112) est constitué par un échangeur de chaleur du type tubulaire.

8. Appareil suivant la revendication 7 caractérisé en ce que le premier canal (132) est constitué par le côté tube de l'échangeur de chaleur (112) tandis que le second canal (138) est constitué par le côté enveloppe de l'échangeur de chaleur (112).

9. Appareil suivant la revendication 6 caractérisé en ce que les fluides de transfert thermique en provenance des première et seconde sources de fluides de transfert thermique sont fournis à l'échangeur de chaleur en vue de traiter thermiquement le fluide thermique destiné à être utilisé dans une seule cuve, afin de cuire et ensuite de refroidir successivement des produits alimentaires contenus dans la cuve.

10. Appareil suivant la revendication 6 caractérisé en ce qu'il comprend en outre des moyens (124,128,142) pour mettre en circulation le fluide thermique à partir de la cuve (12;114), à travers le premier canal (132), et pour le faire revenir à la cuve.
